Europäisches Patentamt

European Patent Office

Office européen des brevets

(11) Veröffentlichungsnummer: **0 435 069 A2**

(12) **EUROPÄISCHE PATENTANMELDUNG**

(21) Anmeldenummer: 90123909.5

(22) Anmeldetag: 12.12.90

(51) Int. Cl.⁵: **C07F 15/00, B01J 31/00**

(30) Priorität: 23.12.89 DE 3942789

(43) Veröffentlichungstag der Anmeldung:
03.07.91 Patentblatt 91/27

(84) Benannte Vertragsstaaten:
AT BE CH DE ES FR GB IT LI NL SE

(71) Anmelder: HOECHST AKTIENGESELLSCHAFT
Postfach 80 03 20
W-6230 Frankfurt am Main 80(DE)

(72) Erfinder: Konkol, Werner, Dr. Dipl.-Chem.
Lützowstrasse 40a
W-4200 Oberhausen 11(DE)
Erfinder: Bahrmann, Helmut, Dr. Dipl.-Chem.
Rohstrasse 48
W-4236 Hamminkeln(DE)
Erfinder: Herrmann, Wolfgang, Prof.-Dr.
Dipl.-Chem.
Waldweg 10
W-8051 Giggenhausen(DE)
Erfinder: Kulpe, Jürgen, Dr. Dipl.-Chem.
Inselsbergstrasse 9
W-6230 Frankfurt 80(DE)

(54) **Sulfoniertes Triphenylphosphan enthaltende Komplexverbindung des Rhodiums.**

(57) Die Erfindung betrifft die chemische Verbindung Bis{($\mu$-hydroxo)bis[tris(natrium-m-sulfophenyl)-phosphan]-rhodium(I)-Dodecahydrat, Verfahren zu ihrer Herstellung und ihre Verwendung.

EP 0 435 069 A2

## SULFONIERTES TRIPHENYLPHOSPHAN ENTHALTENDE KOMPLEXVERBINDUNG DES RHODIUMS

Die Erfindung betrifft eine neue Komplexverbindung des Rhodiums, die als Komplexligand das Trinatriumsalz das Tris(m-sulfophenyl)phosphans und eine Hydroxylgruppe als weiteren Liganden enthält.

Komplexverbindungen definierter Zusammensetzung, die das Trinatriumsalz des in meta-Position trisulfonierten Triphenylphosphans der chemischen Formel $P(C_6H_4\text{-}m\text{-}SO_3Na)_3$ als einzigen oder als einen von mehreren Liganden enthalten, sind kaum bekannt. In der DE 27 00 904 C2, Beispiel 12, wird die Umsetzung von Bis(1,5-cyclooctadien)-nickel mit dem Trinatriumsalz von Tris(m-sulfophenyl)phosphan (im folgenden TPPTS genannt) beschrieben. Man erhält eine rotgefärbte Verbindung, die aus ihrer wäßrigen Lösung durch Eindampfen im Vakuum als feste Substanz gewonnen wird. Nach Angaben der Autoren soll es sich bei dieser Verbindung um das Tetrakis-trinatriumsalz von Tetrakis[(m-sulfophenyl)phosphan]nickel(O) handeln. In der gleichen Druckschrift finden sich auch pauschale Angaben über die Herstellung von TPPTS-Komplexverbindungen des Eisens und des Palladiums. Demnach soll man wasserlösliche Verbindungen oder solche Verbindungen, die unter Reaktionsbedingungen in Lösung gehen, in Gegenwart eines Reduktionsmittels mit wäßriger TPPTS-Lösung umsetzen. Als Reduktionsmittel kommen z.B. $Na[BH_4]$, $K[BH_4]$, Zinkpulver, Magnesium oder Borhydride in Betracht. Weder das Herstellungsverfahren noch einzelne Verbindungen werden durch Beispiele näher beschrieben oder gar charakterisiert.

Komplexverbindungen, die TPPTS als Liganden enthalten, ohne daß die genaue Zusammensetzung dieser Verbindungen bekannt ist, bilden sich bei verschiedenen Umsetzungen aus Metall oder Metallverbindungen, TPPTS und gegebenenfalls weiteren Liganden. So haben speziell Rhodium-Komplexe mit TPPTS-Liganden in jüngster Zeit als Bestandteil von Katalysatorsystemen Bedeutung erlangt, die bei der Hydroformylierung von Olefinen Anwendung finden. Gegenüber anderen Katalysatoren, die für dieselbe Reaktion eingesetzt werden, haben sie den Vorteil, in Wasser löslich zu sein. Daher kann die Hydroformylierung in einem aus wäßriger und organischer Phase bestehenden heterogenen Reaktionsmedium (Zweiphasensystem) durchgeführt werden mit dem Ergebnis, daß sich das Reaktionsprodukt durch einfache Phasentrennung vom wasserlöslichen Katalysator abtrennen läßt. Darüberhinaus stellt diese Arbeitsweise sicher, daß der wertvolle Edelmetallkatalysator annähernd verlustfrei wiedergewonnen oder in die Synthesestufe zurückgeführt werden kann. Ein derartiger Prozeß ist z.B. in der DE 26 27 354 B2 beschrieben.

Auch die Anlagerung von Cyanwasserstoff an ungesättigte organische Verbindungen kann in Gegenwart einer Verbindung des nullwertigen Nickels oder des Eisens oder Palladiums in reduzierter Wertigkeitsstufe und einer wäßrigen Lösung eines sulfonierten Triphenylphosphans, insbesondere einer wäßrigen Lösung von TPPTS, als Katalysator erfolgen. Diese Arbeitsweise ist in der bereits zitierten DE 27 00 904 C2 beschrieben. Statt der Komponenten Nickelsalz und TPPTS-Lösung kann auch eine eigens hergestellte Komplexverbindung, der die Zusammensetzung $Ni(TPPTS)_4$ zugeschrieben wird, als Katalysator eingesetzt werden.

Die vorliegende Erfindung betrifft eine neue, TPPTS enthaltende Komplexverbindung des Rhodiums.

Gegenstand der Erfindung ist die chemische Verbindung $\{(\mu\text{-}OH)Rh[P(C_6H_4\text{-}m\text{-}SO_3Na)_3]_2\}_2$.

Die neue Verbindung ist eine kristalline, rotbraune Substanz. Sie ist in Wasser ohne Zersetzung löslich und kann aus der wäßrigen Lösung als Hydrat isoliert werden. Dieses Hydrat enthält je Natriumion ein Molekül Wasser. Bei Raumtemperatur ist die Verbindung an der Luft beständig.

Die beanspruchte Verbindung ist präparativ auf verschiedenen Wegen zugänglich. Eine bewährte Synthese geht von Chlorotris[tris(natrium-m-sulfophenyl)phosphan]rhodium(I)-Nonahydrat, ClRh(TPPTS)$_3 \bullet 9H_2O$ aus, das man z.B. durch Umsetzung von $RhCl_3 \bullet 3H_2O$ mit TPPTS erhält. Die durch Gelpermeationschromatographie gereinigte Komplexverbindung wird in wäßriger Lösung mit Hydrazinhydrat behandelt. Die Umsetzung erfolgt bei Raumtemperatur oder wenig erhöhter Temperatur. Das Hydrazinhyrat wird üblicherweise im stöchiometrischen Verhältnis eingesetzt.

Nach einer anderen Arbeitsweise setzt man den aus der Literatur bekannten Komplex $HRh[P(C_6H_5)_3]_4$ in einem Zweiphasensystem (z.B. Methylenchlorid/Wasser) mit überschüssigem TPPTS um; es entsteht elementarer Wasserstoff. Bei dieser Reaktion wird auch der Komplex (OH)Rh(TPPTS)$_3$ gebildet, den man präparativ erhält, wenn $RhCl_3 \bullet 3H_2O$ in wäßriger Lösung mehr als 15 Stunden mit überschüssigem TPPTS bei Raumtemperatur behandelt wird (DE-Patentanmeldung P 39 21 295.5).

Zur Aufarbeitung des Reaktionsproduktes und zur Isolierung der neuen Verbindung, die unabhängig vom Herstellungsverfahren in wäßriger Lösung vorliegt, dampft man das Wasser, gegebenenfalls nach vorheriger Filtration der Lösung, im Vakuum ab. Im allgemeinen erhält man auf diesem Wege nicht die reine Verbindung, sondern ein verunreinigtes Produkt oder auch ein Gemisch verschiedener TPPTS-Komplexverbindungen, die sich bei der Herstellung nebeneinander gebil det haben. Es ist daher erforderlich, zur Gewinnung der Reinsubstanz spezielle Reinigungs- und Trennverfahren anzuwenden. Als besonders geeignet zur Lösung dieser Aufgabe hat sich die Chromatographie an Gelen erwiesen, die Gegenstand der deutschen Patentanmeldung P 38 22 036.9 ist. Nach dieser Behandlung liegt die Verbindung analysenrein und spektroskopisch rein vor.

Die neue Verbindung kristallisiert aus der wäßrigen Lösung als Hydrat. Durch Entwässerung unter schonenden Bedingungen, d.h. bei Temperaturen unterhalb des Schmelz- bzw. Zersetzungspunktes und unter Anwendung verminderten Druckes, zweckmäßig Hochvakuums, läßt sich aus ihr, ohne daß Zersetzung eintritt, die wasserfreie Verbindung herstellen. Der beanspruchte Schutz erstreckt sich daher sowohl auf den wasserhaltigen als auch auf den wasserfreien TPPTS-Komplex.

Die erfindungsgemäße Verbindung ist katalytisch aktiv und wird mit Erfolg als Katalysator oder Bestandteil von Katalysatoren bei verschiedenen Reaktionen eingesetzt.

Die Erfindung wird im nachfolgenden Beispiel näher erläutert.

Synthese von Bis{((μ-hydroxo)bis[tris(natrium-m-sulfo-phenyl)phosphan]-rhodium(I)}-Dodecahydrat der Formel {(μ-OH)Rh[P($C_6H_4$-m-$SO_3Na)_3]_2\}_2$ • 12 $H_2O$:

Eine Lösung von 250 mg (0.13 mmol) ClRh-(TPPTS)$_3$ 9$H_2O$ in 20 ml destilliertem Wasser wird mit 5 ml (5.15 g, 0.102 mol) Hydrazinhydrat versetzt und 48 h bei Raumtemperatur gerührt. Anschließend zieht man das Lösungsmittel im Vakuum einer Ölpumpe vollständig ab. Der feste Rückstand wird in 10 ml Wasser aufgenommen und an Sephadex G-15 (mit

Epichlorhydrin vernetzte Dextrane) säulenchromatographisch gereinigt. Die Produktdetektion erfolgt UV/VIS-spektrometrisch sowie refraktometrisch. Ausbeute: 140 mg (79 %); rotbraunes Glas.

Charakterisierung

$^{31}$P-NMR    (109.3 MHz, $D_2O$, 21°C): δ = 58.9 ppm [d]; $^1$J(Rh,P) = 203 Hz

IR    (KBr, cm$^{-1}$): 1635 (m), 1454 (m), 1396 (m), 1192 (Sch, sst), 1037 (st).

Elementaranalyse: ($C_{72}H_{72}Na_{12}O_{50}P_4Rh_2S_{12}$; 2729.6)

Ber. C 31.58 H 2.73 Cl 0.0 O 29.31 P 4.53 Rh 7.53 S 14.09

Gef. C 32.35 H 2.62 Cl 0.3 O 29.57 P 4.33 Rh 7.20 S 14.42

## Ansprüche

1. Bis{(μ-hydroxo)bis[tris(natrium-m-sulfophenyl)-phosphan]-rhodium(I)}-Dodecahydrat.

2. Verfahren zur Herstellung der Verbindung nach Anspruch 1, dadurch gekennzeichnet, daß man ClRh[P($C_6H_4$-m-$SO_3Na)_3$] 9$H_2O$ in wäßriger Lösung bei Raumtemperatur oder wenig erhöhter Temperatur mit Hydrazinhydrat behandelt.

3. Verfahren zur Herstellung der Verbindung nach Anspruch 1, dadurch gekennzeichnet, daß man HRh[P($C_6H_5)]_4$ mit überschüssigem P($C_6H_4$-m-$SO_3Na)_3$ umsetzt.

4. Verfahren nach Anspruch 1 oder 2, dadurch gekennzeichnet, daß das Reaktionsprodukt durch Gelchromatographie gereinigt wird.

5. Verwendung der Verbindung nach Anspruch 1 als Katalysator oder Bestandteil von Katalysatoren.